(19)

**Europäisches Patentamt**
**European Patent Office**
**Office européen des brevets**

(11) **EP 1 527 974 B1**

(12) **EUROPÄISCHE PATENTSCHRIFT**

(45) Veröffentlichungstag und Bekanntmachung des Hinweises auf die Patenterteilung:
**06.08.2008  Patentblatt 2008/32**

(51) Int Cl.:
**B60T 17/00** *(2006.01)*     **B60T 11/32** *(2006.01)*

(21) Anmeldenummer: **04025292.6**

(22) Anmeldetag: **25.10.2004**

(54) **Luftaufbereitungsanlage und Verfahren zum Versorgen einer Nutzkraftfahrzeugbremsanlage mit Druckluft**

Air treatment system and method of supplying a brake system of a commercial motor vehicle with compressed air

Système de traitement d'air et méthode pour alimenter un système de freinage d'un véhicule utilitaire à moteur avec de l'air comprimé

(84) Benannte Vertragsstaaten:
**AT BE BG CH CY CZ DE DK EE ES FI FR GB GR HU IE IT LI LU MC NL PL PT RO SE SI SK TR**

(30) Priorität: **31.10.2003  DE 10351095**

(43) Veröffentlichungstag der Anmeldung:
**04.05.2005  Patentblatt 2005/18**

(73) Patentinhaber: **KNORR-BREMSE SYSTEME FÜR NUTZFAHRZEUGE GMBH**
**80809 München (DE)**

(72) Erfinder: **Hilberer, Eduard**
**68766 Hockenheim (DE)**

(74) Vertreter: **Schönmann, Kurt**
**Knorr-Bremse AG,**
**Patentabteilung - V/RG,**
**Moosacher Strasse 80**
**80809 München (DE)**

(56) Entgegenhaltungen:
**EP-A- 1 164 066          DE-C1- 19 700 243**

Printed by Jouve, 75001 PARIS (FR)

## Beschreibung

Die Erfindung betrifft eine Luftaufbereitungsanlage zum Versorgen einer Nutzkraftfahrzeugbremsanlage mit Druckluft, mit einem ersten Druckluftausgang, an den ein erster Druckluftbehälter anschließbar ist, einem weiteren Druckluftausgang zur Versorgung einer Anhängerbremsanlage und einem Drucklufteingang, der über ein erstes Überströmventil mit dem ersten Druckluftausgang und über ein weiteres Überströmventil mit dem weiteren Druckluftausgang verbunden ist.

Die Erfindung betrifft weiterhin ein Verfahren zum Versorgen einer Nutzkraftfahrzeugbremsanlage mit Druckluft mittels einer Luftaufbereitungsanlage, wobei die Luftaufbereitungsanlage umfasst: einen ersten Druckluftausgang, an den ein erster Druckluftbehälter anschließbar ist, einen weiteren Druckluftausgang zur Versorgung einer Anhängerbremsanlage und einen Druckluftausgang, der über ein erstes Überströmventil mit dem ersten Druckluftausgang und über ein weiteres Überströmventil mit dem weiteren Druckluftausgang verbunden ist.

Gattungsgemäße Luftaufbereitungsanlagen erfüllen zahlreiche die Druckluftversorgung eines Nutzkraftfahrzeugs betreffende Funktionen. Unter anderem dienen die Luftaufbereitungsanlagen dazu, das Bremssystem eines Nutzkraftfahrzeugs mit Druckluft zu versorgen. Insbesondere werden über Luftaufbereitungsanlagen Druckluftbehälter mit Luft befüllt, um so einen Druckluftvorrat für die verschiedenen Bremskreise zur Verfügung zu stellen. Bei einem Nutzkraftfahrzeug mit zwei Bremskreisen für die Betriebsbremsanlage ist es erforderlich, für jeden dieser Bremskreise einen Druckluftbehälter vorzusehen. Im Allgemeinen ist ein dritter Druckluftbehälter vorgesehen, der einen Vorrat für die Anhängerbremsanlage ("Kreis 3") bereithält.

Aus Kostengründen ist es erwünscht, den dritten Behälter für die Anhängerbremsanlage einzusparen. Die Erfüllung dieses Wunsches ist jedoch kritisch, da hohe Sicherheitsanforderungen an die Bremsanlage eines Nutzfahrzeugs gestellt werden. Beispielsweise muss bei unmittelbar aufeinanderfolgenden Bremsvorgängen bis zu einer bestimmten gesetzlich vorgeschriebenen Anzahl ein Mindestbremsdruck zur Verfügung gestellt werden können, sowohl in der Betriebsbremsanlage des Zugfahrzeugs als auch in der Anhängerbremsanlage. Bei Entfernung des Vorratsbehälters für den Anhänger muss eine Nachversorgung der Anhängerbremsanlage daher auf andere Weise als durch den nicht mehr vorhandenen Vorratsbehälter sichergestellt werden.

Die DE 199 13 726 A1 und die DE 100 29 900 A1 haben bereits vorgeschlagen, die Nachversorgung der Anhängerbremsanlage durch elektrisch ansteuerbare Überströmventile zu ermöglichen, die im geöffneten Zustand ein Überströmen von Druckluft von den Druckluftbehältern der Betriebsbremsanlage zur Anhängerbremsanlage gestatten.

Der Erfindung liegt die Aufgabe zugrunde, eine Luftaufbereitungsanlage zur Verfügung zu stellen, die eine Nachversorgung der Anhängerbremsanlage mit Druckluft sicherstellt, ohne dass die Notwendigkeit besteht, Überströmventile direkt elektrisch anzusteuern. Weiterhin soll ein Verfahren zum Versorgen einer Nutzkraftfahrzeugbremsanlage unter Verwendung einer erfindungsgemäßen Luftaufbereitungsanlage angegeben werden.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung baut auf der gattungsgemäßen Luftaufbereitungsanlage dadurch auf, dass parallel zu dem Überströmventil ein Rückschlagventil vorgesehen ist, das eine das Überströmventil umgehende Luftströmung von dem ersten Druckluftausgang weg über das Rückschlagventil ermöglicht und eine das Überströmventil umgehende Luftströmung zu dem ersten Druckluftausgang hin unterbindet, und dass das weitere Überströmventil einen Steuerraum aufweist, der über ein steuerbares Ventil mit Druck beaufschlagt werden kann, wobei bei geöffnetem steuerbarem Ventil eine Luftströmung von dem ersten Druckluftausgang weg über das Rückschlagventil und das steuerbare Ventil zu dem Steuerraum des weiteren Überströmventils ermöglicht wird, um so ein Öffnen des weiteren Überströmventils zu unterstützen. Auf diese Weise wird eine Nachversorgung der Anhängerbremsanlage sichergestellt, wobei auf einen der Anhängerbremsanlage zugeordneten Druckluftvorratsbehälter verzichtet werden kann. Dabei wird das einem Betriebsbremskreis zugeordnete Überströmventil durch ein parallel geschaltetes Rückschlagventil umgangen.

Nützlicherweise ist vorgesehen, dass zusätzlich zu dem ersten Druckluftausgang ein zweiter Druckluftausgang vorgesehen ist, an den ein zweiter Druckluftbehälter anschließbar ist, dass zusätzlich zu dem Überströmventil, welches ein erstes Überströmventil ist, ein zweites Überströmventil vorgesehen ist, dass der Druckluftausgang über das zweite Überströmventil mit dem zweiten Druckluftausgang verbunden ist, dass parallel zu dem zweiten Überströmventil ein Rückschlagventil vorgesehen ist, das eine das zweite Überströmventil umgehende Luftströmung von dem zweiten Druckluftausgang weg über das zweite Rückschlagventil ermöglicht und eine das zweite Überströmventil umgehende Luftströmung zu dem zweiten Druckluftausgang hin unterbindet, und dass bei geöffnetem steuerbarem Ventil eine Luftströmung von dem zweiten Druckluftausgang weg über das Rückschlagventil und das steuerbare Ventil zu dem Steuerraum des weiteren Überströmventils ermöglicht wird, um so ein Öffnen des weiteren Überströmventils zu unterstützen. Die Erfindung ist also im Zusammenhang mit üblichen Fahrzeugbremsanlagen, die mit zwei Betriebsbremskreisen ausgestattet sind, besonders in der Weise nützlich ausgebildet, dass die Überströmventile beider Betriebsbremskreise durch in erfindungsgemäßer Weise angeordnete Rückschlagventile überbrückt sind, um so mittels beider Betriebsbremskreise eine Nachversorgung des Anhängerbremskreises zu ermöglichen. In diesem Zusammenhang ist zu bemerken, dass bei Luftaufbereitungsanlagen des Standes der Technik, die durch die Patentanmelderin vertrieben werden, ebenfalls bereits Rückschlagventile parallel zu den Überströmventilen zu den Betriebsbremsanlagenkreisen vorgesehen sind. Allerdings sind diese Rückschlagventile in Luftaufbereitungsanlagen des Standes der Technik anders herum eingebaut; hierdurch wird ein Befüllen der Betriebsbremsanlagenkreise unterhalb des Öffnungsdrucks der Überströmventile frühzeitig während des Füllvorgangs ermöglicht. Indem man die Rückschlagventile nun erfindungsgemäß "umdreht", verliert man zwar ihre Wirkung auf die Füllreihenfolge, man erhält im Gegenzug aber eine Möglichkeit, eine Nachversorgung der Anhängerbremsanlage über ein steuerbares Ventil bereitzustellen. Geht man von bestehenden Luftaufbereitungsanlagen aus, so lässt sich die vorliegende Erfindung mit geringen konstruktiven Änderungen umsetzen, da insbesondere ein "Umdrehen" der Rückschlagventile einfach zu bewerkstelligen ist.

Die Erfindung ist in besonders vorteilhafter Weise dadurch weitergebildet, dass das steuerbare Ventil ein Magnetventil ist, das direkt elektrisch betätigt werden kann. Die Installation eines solchen Magnetventils ist mit geringem konstruktivem Aufwand realisierbar. Bei Luftaufbereitungsanlagen des Standes der Technik, die durch die Patentanmelderin vertrieben werden, kann einem bereits vorhandenen Magnetventil die erfindungsgemäße Funktion zugewiesen werden.

Nützlicherweise ist vorgesehen, dass das Magnetventil im unbestromten Zustand geschlossen ist. Da die Nachversorgung der Anhängerbremsanlage nur gelegentlich nötig beziehungsweise erwünscht sein wird, ist es sinnvoll, das Magnetventil so auszulegen, dass nur dann ein entsprechender Strom fließen muss.

In einer bevorzugten Ausführungsform der vorliegenden Erfindung ist diese dadurch weitergebildet, dass das Magnetventil von einer elektronischen Steuereinheit der Luftaufbereitungsanlage ansteuerbar ist. Es sind also keine zusätzlichen Vorkehrungen zur elektronischen Steuerung zu treffen. Vielmehr kann das Magnetventil durch die ohnehin vorhandene elektronische Steuereinheit der Luftaufbereitungsanlage gesteuert werden, wobei diese über den CAN-Bus des Fahrzeugs mit außerhalb der Luftaufbereitungsanlage zur Verfügung gestellten Daten versorgt wird.

Es kann nützlich sein, dass der drucklufteingangsseitige Anschluss des steuerbaren Ventils zwischen dem Drucklufteingang und einem Druckbegrenzer liegt. Dies ist eine Möglichkeit, das Ventil anzuschließen, die je nach Auslegung der verschiedenen Druckluftführungen innerhalb der Luftaufbereitungsanlage konstruktive Vorteile haben kann.

Es ist weiterhin möglich, dass der drucklufteingangsseitige Anschluss des steuerbaren Ventils zwischen einem Druckbegrenzer und dem weiteren Überströmventil liegt. Auch hierdurch können je nach Auslegung der verschiedenen Druckluftführungen konstruktive Vorteile entstehen.

Die erfindungsgemäße Luftaufbereitungsanlage ist in besonders vorteilhafter Weise dadurch weitergebildet, dass das weitere Überströmventil ein Ventilgehäuse, einen Ventilkolben und eine Ventilfeder aufweist, dass der Ventilkolben durch eine von der Ventilfeder aufgebrachte Kraft das weitere Überströmventil über einen Ventilsitz am Ventilgehäuse schließen kann und dass der Ventilkolben mit dem Ventilgehäuse im geschlossenen Zustand des weiteren Überströmventils mindestens drei voneinander getrennte Räume innerhalb des Ventilgehäuses definiert, wobei in einem ersten Raum die Ventilfeder angeordnet ist und der erste Raum eine Öffnung zur Atmosphäre aufweist, ein zweiter Raum an den Ventilsitz angrenzt und ein dritter Raum der Steuerraum ist, an den eine mit dem steuerbaren Ventil verbundene Steuerleitung angeschlossen ist. Auf diese Weise können durch Druckbeaufschlagung des Steuerraums sowohl der Öffnungsdruck als auch der Schließdruck des Überströmventils beeinflusst werden, was letztlich eine Nachversorgung der Anhängerbremsanlage in einem breiten Druckintervall ermöglicht.

In diesem Zusammenhang ist es besonders nützlich, dass die drei Räume durch eine Außenkontur des Ventilkolbens und Dichtmittel voneinander getrennt sind, wobei vom Ventilsitz aus betrachtet ein vorderes Dichtmittel den zweiten Raum gegen den Steuerraum abdichtet und ein hinteres Dichtmittel den Steuerraum gegen den ersten Raum abdichtet, und dass die Außenkontur derart gestaltet ist, dass ein Druck im Steuerraum den Ventilkolben gegen die Kraft der Ventilfeder mit Kraft beaufschlagt. Die Funktionsweise des weiteren Überströmventils wird also maßgeblich durch die Flächenverhältnisse der mit Druck beaufschlagten Flächen sowie die von der Feder aufgebrachte Kraft bestimmt. Es lassen sich auf diese Weise je nach Bedarf unterschiedliche Druckintervalle wählen, in denen das weitere Überströmventil zur Nachversorgung der Anhängerbremsanlage arbeiten kann.

Die Erfindung baut auf den gattungsgemäßen Verfahren dadurch auf, dass parallel zu dem Überströmventil ein Rückschlagventil vorgesehen ist, das eine das Überströmventil umgehende Luftströmung von dem ersten Druckluftausgang weg über das Rückschlagventil ermöglicht und eine das Überströmventil umgehende Luftströmung zu dem ersten Druckluftausgang hin unterbindet, dass das weitere Überströmventil einen Steuerraum aufweist, der über ein steuerbares Ventil mit Druck beaufschlagt werden kann, wobei bei geöffnetem steuerbarem Ventil eine Luftströmung von dem ersten Druckluftausgang weg über das Rückschlagventil und das steuerbare Ventil zu dem Steuerraum des weiteren Überströmventils ermöglicht wird, um so ein Öffnen des weiteren Überströmventils zu unterstützen. Auf diese Weise werden die Besonderheiten und Vorteile des erfindungsgemäßen Luftaufbereitungssystems im Rahmen eines Verfahrens realisiert. Dies gilt auch für die nachfolgenden angegebenen besonders bevorzugten Ausführungsformen des erfindungsgemäßen Verfahrens.

Dieses ist nützlicherweise dadurch weitergebildet, dass zusätzlich zu dem ersten Druckluftausgang ein zweiter Druckluftausgang vorgesehen ist, an den ein zweiter Druckluftbehälter anschließbar ist, dass zusätzlich zu dem Überströmventil, welches ein erstes Überströmventil ist, ein zweites Überströmventil vorgesehen ist, dass der Drucklufteingang über das zweite Überströmventil mit dem zweiten Druckluftausgang verbunden ist, dass parallel zu dem zweiten Überströmventil ein Rückschlagventil vorgesehen ist, das eine das zweite Überströmventil umgehende Luftströmung von dem zweiten Druckluftausgang weg über das zweite Rückschlagventil ermöglicht und eine das zweite Überströmventil umgehende Luftströmung zu dem zweiten Druckluftausgang hin unterbindet, und dass bei geöffnetem steuerbarem Ventil eine Luftströmung von dem zweiten Druckluftausgang weg über das Rückschlagventil und das steuerbare Ventil zu dem Steuerraum des weiteren Überströmventils ermöglicht wird, um so ein Öffnen des weiteren Überströmventils zu unterstützen.

Es ist von besonderem Vorteil, dass das steuerbare Ventil geöffnet wird, wenn bei intakten Betriebsbremskreisen ein Bremssignal vorliegt und der der Anhängerbremsanlage zur Verfügung stehende Druck in einem vorgegebenen Intervall liegt. Die obere Druckintervallgrenze ist so gewählt, dass bei einem Unterschreiten dieses Druckwertes eine Nachversorgung der Anhängerbremsanlage erfolgen sollte, während der untere Intervallgrenzwert angibt, bis zu welchem Druck eine Öffnungsunterstützung des weiteren Überströmventils sinnvoll ist.

Es erweist sich als besonders nützlich, dass das Intervall zwischen ca. 3 und 6,5 bar liegt.

Weiterhin ist es von Vorteil, dass das steuerbare Ventil geöffnet wird, wenn bei einem defekten Betriebsbremskreis ein Bremssignal vorliegt. Eine Nachversorgung der Anhängerbremsanlage wird somit auch dann sichergestellt, wenn einer der Betriebsbremskreise defekt ist.

Die Erfindung betrifft weiterhin ein Nutzkraftfahrzeug mit einer erfindungsgemäßen Luftaufbereitungsanlage sowie ein Überströmventil zur Verwendung als weiteres Überströmventil einer erfindungsgemäßen Luftaufbereitungsanlage.

Der Erfindung liegt die Erkenntnis zugrunde, dass durch die Bereitstellung eines Überströmventils eine Nachversorgung der Anhängerbremsanlage sichergestellt werden kann, wobei nur geringe konstruktive Änderungen an bestehenden Luftaufbereitungsanlagen erforderlich sind. Insbesondere kann das Öffnen des Überströmventils durch die Beaufschlagung eines Druckraums mit Druckluft unterstützt und der Schließdruck des Überströmventils ebenfalls durch Beaufschlagung des Steuerraums beeinflusst werden.

Die Erfindung wird nun mit Bezug auf die begleitenden Zeichnungen anhand bevorzugter Ausführungsformen beispielhaft erläutert.

Dabei zeigt:

Figur 1      eine Schaltskizze einer ersten Ausführungsform einer erfindungsgemäßen Luftaufbereitungsanlage;

Figur 2      eine seitliche Schnittansicht eines erfindungsgemäßen Überströmventils;

Figur 3      eine Darstellung zur Erläuterung der wirksamen Flächen eines erfindungsgemäßen Überströmventils;

Figur 4      ein Flussdiagramm zur Erläuterung eines erfindungsgemäßen Verfahrens.

Bei der nachfolgenden Beschreibung der Zeichnungen bezeichnen gleiche Bezugszeichen gleiche oder vergleichbare Komponenten.

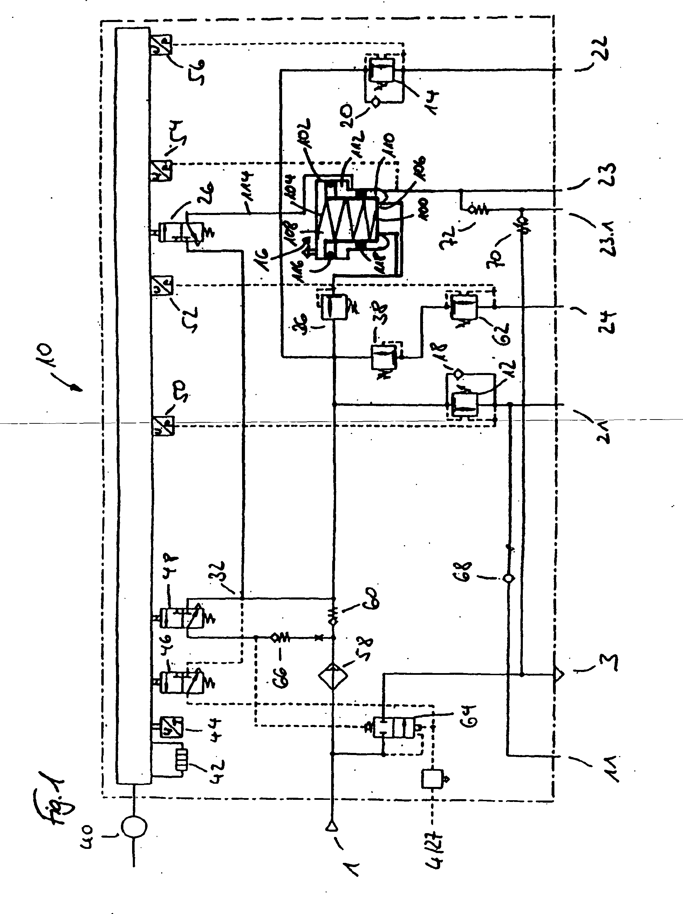

Figur 1 zeigt eine Schaltskizze einer ersten Ausführungsform einer erfindungsgemäßen Luftaufbereitungsanlage. Die Luftaufbereitungsanlage 10 ist mit einem Zentralstecker 40 für den elektrischen Anschluss in einem Fahrzeug ausgestattet. Innerhalb der Luftaufbereitungsanlage 10 stehen die folgenden Bauteile mit der elektrischen Versorgung bzw. Auswertung in Verbindung: eine Heizung 42, ein Temperatursensor 44, ein Magnetventil 46 zur Druckreglersteuerung, ein Magnetventil 48 zur Regenerationssteuerung, ein Drucksensor 50 zur Messung des Drucks $p_{21}$ in Kreis 1 (entsprechend Druckluftausgang 21) der Betriebsbremsanlage, ein Drucksensor 52 zur Messung des Drucks an einem Nebenverbraucheranschluss 24, ein Magnetventil 26, ein Drucksensor 54 zur Messung des Drucks $p_{23}$ im Anhängerbremskreis (Kreis 3 entsprechend Druckluftausgang 23) und ein Drucksensor 56 zur Messung des Drucks $p_{22}$ in Kreis 2 (entsprechend Druckluftausgang 22) der Betriebsbremsanlage. Die Luftaufbereitungsanlage ist mit einem Befülleingang 1 ausgestattet, so dass eine Befüllung über die Trocknerkartusche 58 und das Druckreglerrückschlagventil 60 erfolgen kann. Die Befüllung des Kreises 1 der Betriebsbremsanlage erfolgt über das Überströmventil 12 zum Druckluftausgang 21. Kreis 2 der Betriebsbremsanlage wird über das Überströmventil 14 zum Druckluftausgang 22 befüllt. Die Befüllung des Kreises 3 für die Anhängerbremsanlage erfolgt über ein Druckbegrenzungsventil 36 und das weitere Überströmventil 16; hierüber wird ebenfalls der Ausgang 23.1 für die Feststellbremsanlage mit Druckluft beliefert. Der Nebenverbrauchanschluss 24 wird über ein Druckbegrenzungsventil 38 und das Überströmventil 62 mit Druckluft versorgt. Die Luftaufbereitungsanlage 10 hat weiterhin einen Steueranschluss 4/27 für ein Energiesparsystem, einen Fremdbefüllungseingang 11 sowie einen Ablass 3. Der Ablass 3 steht mit einem Ablassventil 64 in Verbindung. Weitere Komponenten der Luftaufbereitungsanlage 10 sind ein Regenerationsrückschlagventil 66, ein Fremdbefüllungsrückschlagventil 68 sowie zwei Rückschlagventile 70, 72, die der Feststellbremsanlage zugeordnet sind. Des Weiteren sind parallel zu den Überströmventilen 12, 14 Rückschlagventile 18, 20 so angeordnet, dass eine Strömung von den Anschlüssen 21, 22 von diesen Anschlüssen weg erfolgen kann.

Das weitere Überströmventil 16 umfasst einen Ventilkolben 100, ein Ventilgehäuse 102 und eine Ventilfeder 104. Der Ventilkolben 100 wirkt mit einem Ventilsitz 106 zum Verschließen eines Drucklufteingangs des Überströmventils 16 zusammen. Hierzu wird der Ventilkolben 100 durch die Kraft der Ventilfeder 104 auf den Ventilsitz 106 gepresst. Die Ventilfeder 104 ist in einem ersten Raum 108 des Überströmventils 16 angeordnet, der mit der Atmosphäre verbunden ist. Ein zweiter Raum 110 des Überströmventils 16 grenzt an den Ventilsitz 106 an. Ein dritter Raum 112 dient als Steuerraum. Dieser Steuerraum 112 ist über eine Steuerleitung 114 mit dem Magnetventil 126 verbunden. Die drei Räume sind durch einen ersten O-Ring 116 zwischen dem ersten Raum 108 und dem Steuerraum 112 und einen zweiten O-Ring 118 zwischen dem Steuerraum 112 und dem zweiten Raum 110 gegeneinander abgedichtet.

Im Normalbetrieb der Luftaufbereitungsanlage 10 arbeitet das Überströmventil 16 wie folgt: Bei Erreichen eines Öffnungsdruckes am Ventilsitz 106 des Überströmventils 16 und unbestromtem, d.h. geschlossenem Magnetventil 26 hebt sich der Ventilkolben 100 vom Ventilsitz 106. Hierdurch wirkt der Druck auf eine größere Fläche, nämlich zusätzlich auf die sich zum zweiten Raum 110 hin erstreckende Grenzfläche zwischen dem zweiten Raum 110 und dem Steuerraum 112. Ein Schließen des Überströmventils 16 wird daher erst wieder bei einem Schließdruck erfolgen, der niedriger ist als der Öffnungsdruck. Diese absoluten Werte des Öffnungsdrucks und des Schließdrucks werden durch die beteiligten Flächen und die Kraft der Ventilfeder 104 bestimmt.

Das Öffnen des Überströmventils 16 kann, falls erforderlich und erwünscht, unterstützt werden, indem das Magnetventil 26 bestromt und damit geöffnet wird. Hierdurch gelangt Druckluft vom Drucklufteingang bzw. über die Rückschlagventile 18, 20 aus den Betriebsbremskreisen in den Steuerraum 112. Folglich wirkt auf den Ventilkolben 100 eine zusätzliche Kraft entgegen der Kraft der Ventilfeder 104, so dass das Öffnen des Überströmventils 16 unterstützt wird beziehungsweise ein Schließen des Überströmventils 16 verhindert wird. Dies wird in Bezug auf die weiteren Figuren näher erläutert.

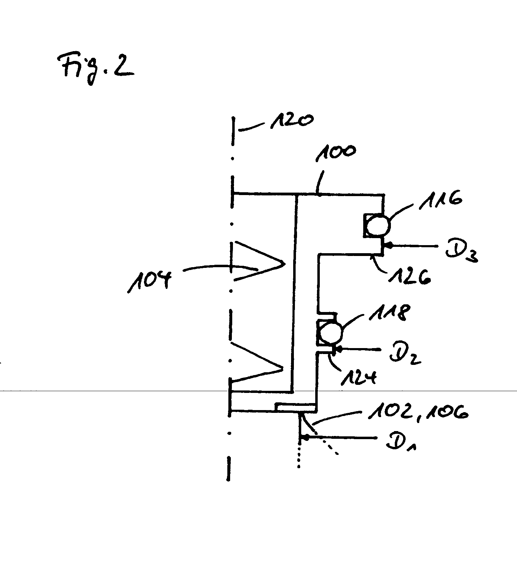

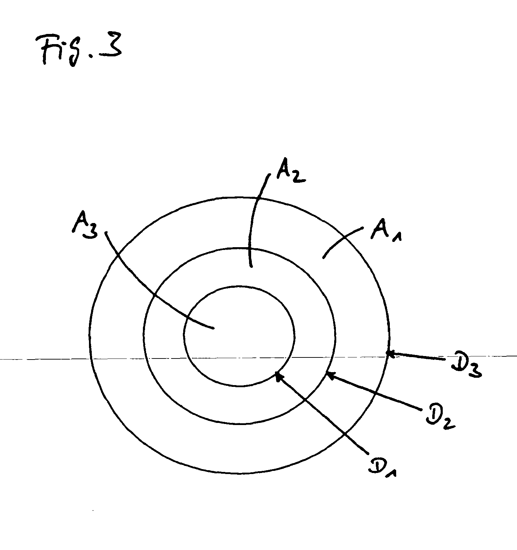

Figur 2 zeigt eine seitliche Schnittansicht eines erfindungsgemäßen Überströmventils. Figur 3 zeigt eine Darstellung zur Erläuterung der wirksamen Flächen eines erfindungsgemäßen Überströmventils. In Figur 2 ist die Außenkontur des Kolbens 100 erkennbar sowie die relative Anordnung der Ventilfeder 104 und des Ventilgehäuses 102 bzw. des Ventilsitzes 106. Der zylindersymmetrisch ausgebildete Ventilkolben 100 ist nur bis zur Symmetrieachse 120 dargestellt. Der Kolben 100 wirkt über eine Elastomerdichtung 122 mit dem Ventilsitz 106 zusammen. Der innerhalb des Ventilsitzes 106 liegende Teil des Kolbens hat einen Durchmesser $D_1$. Im weiteren Verlauf vom Ventilsitz weg, hat der Ventilkolben einen Kragen 124, von dem ein O-Ring 118 gehalten wird. Im weiteren Verlauf des Ventilkolbens 100 vom Ventilsitz 106 weg ist ein weiterer Kragen 126 vorgesehen, der ebenfalls einen O-Ring 116 trägt. Das abgesehen vom Ventilsitz 106 nicht weiter dargestellte Gehäuse 102 ist nun so um den Ventilkolben 100 angeordnet, dass die O-Ringe 116, 118 zwischen Ventilkolben 100 und Ventilgehäuse zusammengepresst werden. Die hierdurch entstehenden Räume werden teilweise durch die Krägen 124, 126 begrenzt, wobei durch die unterschiedlichen wirksamen Flächen der Krägen 124, 126 den Ventilkolben 100 verschiebende Kräfte ausgeübt werden können. Wird durch das in Figur 1 dargestellte Magnetventil 26 beispielsweise der in den Betriebsbremskreisen vorliegende Druck $P_{21/22}$ in den Steuerraum des Überströmventils eingebracht, so wirkt auf den Ventilkolben 100 die Schaltkraft $F_1 = P_{21/22} A_1$, wobei $A_1$ die zusätzliche dem Steuerraum 112 zugewandte Kreisringfläche des Kragens 126 abzüglich der dem Steuerraums 112 zugewandten Kreisringfläche des Kragens 124 ist. Die Fläche $A_1$ berechnet sich demnach zu:

$$A_1 = (D_3 - D_2)^2 \cdot \frac{\pi}{4}.$$

Die weiteren in Figur 3 gezeigten Flächen sind die Entlastungsfläche $A_2$ und die Öffnungsfläche $A_3$ des Überströmventils 16.

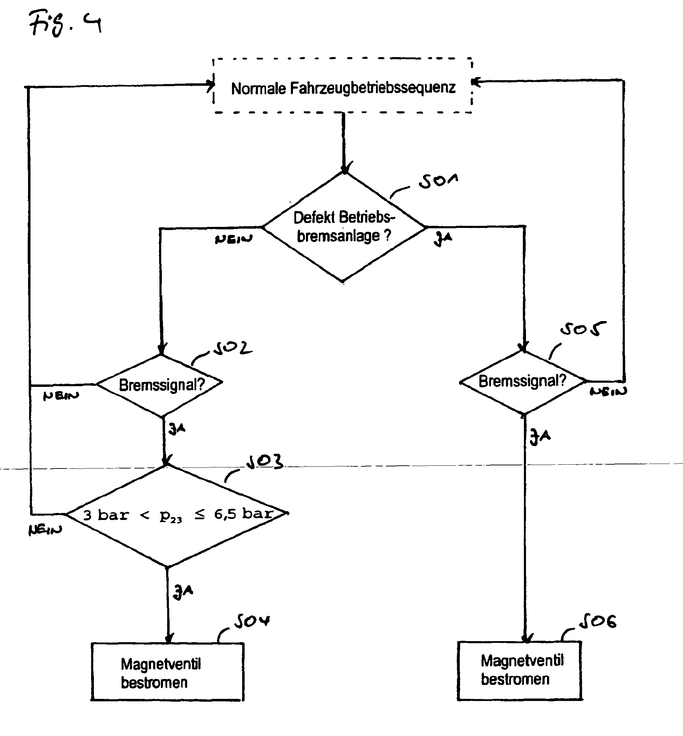

Figur 4 zeigt ein Flussdiagramm zur Erläuterung eines erfindungsgemäßen Verfahrens. Ausgehend von einer normalen Fahrzeugbetriebssequenz wird in Schritt S01 in der elektronischen Steuerung der Luftaufbereitungsanlage geprüft, ob die Betriebsbremsanlage defekt ist. Ist dies nicht der Fall, so wird in Schritt S02 abgefragt, ob ein Bremssignal vorliegt. Liegt kein Bremssignal vor, so ist im Hinblick auf die Nachversorgung der Anhängerbremsanlage nichts zu veranlassen, und der Ablauf geht zum normalen Fahrzeugbetrieb über. Liegt jedoch ein Bremssignal vor, so wird im nachfolgenden Schritt S03 geprüft, ob der der Anhängerbremsanlage zur Verfügung stehende Druck $p_{23}$ im Intervall zwischen 3 bar und 6,5 bar liegt. Ist dies der Fall, so sollte eine Nachversorgung der Anhängerbremsanlage stattfinden, das heißt das Magnetventil (Magnetventil 26, siehe Figur 1) wird gemäß Schritt S04 bestromt. Außerhalb des angegebenen Druckintervalls für $p_{23}$ wird zum normalen Fahrzeugbetrieb übergegangen, da entweder unterhalb des Grenzwertes von 3 bar keine Nachversorgung der Anhängerbremsanlage mehr möglich ist oder da oberhalb des Grenzwertes von 6,5 bar eine Nachversorgung nicht erforderlich ist.

Wird in Schritt S01 ermittelt, dass die Betriebsbremsanlage defekt ist, so wird in Schritt S05 ebenfalls abgefragt, ob ein Bremssignal vorliegt. Bei fehlendem Bremssignal wird wiederum zum normalen Fahrzeugbetrieb zurückgekehrt. Liegt ein Bremssignal vor, so wird in jedem Fall ohne weitere Abfrage das Magnetventil S06 bestromt. Auf diese Weise wird auch bei einem defekten Betriebsbremskreis und vorliegendem Bremssignal in jedem Fall sichergestellt, dass eine Nachversorgung der Anhängerbremsanlage stattfinden kann.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

**Bezugszeichenliste**

| | |
|---|---|
| 1 | Drucklufteingang |
| 3 | Ablass |
| 10 | Luftaufbereitungsanlage |
| 11 | Fremdbefüllungseingang |
| 12 | Überströmventil |
| 14 | Überströmventil |
| 16 | Überströmventil |
| 18 | Rückschlagventil |
| 20 | Rückschlagventil |
| 21 | Druckluftausgang |
| 22 | Druckluftausgang |
| 23 | Druckluftausgang |
| 23.1 | Druckluftausgang |
| 24 | Druckluftausgang |
| 26 | Bypass-Magnetventil |
| 28 | Bypass-Vorsteuerventil, pneumatisch |
| 30 | Magnetventil |
| 32 | Anschluss, drucklufteingangsseitig |
| 34 | Anschluss, drucklufteingangsseitig |
| 36 | Druckbegrenzer |
| 38 | Druckbegrenzer |
| 40 | Zentralstecker |
| 42 | Heizung |
| 44 | Temperatursensor |
| 46 | Magnetventil zur Druckreglersteuerung |
| 48 | Magnetventil zur Regenerationssteuerung |
| 50 | Drucksensor |
| 52 | Drucksensor |
| 54 | Drucksensor |
| 56 | Drucksensor |
| 58 | Trocknerkartusche |
| 60 | Rückschlagventil |
| 62 | Überströmventil |
| 64 | Ablassventil |
| 66 | Rückschlagventil |
| 68 | Rückschlagventil |
| 70 | Rückschlagventil |

| | |
|---|---|
| 72 | Rückschlagventil |
| 74 | pneumatisch entsperrbares Rückschlagventil |
| 4/27 | Steueranschluss für Energiesparsystem |
| 100 | Ventilkolben |
| 102 | Ventilgehäuse |
| 104 | Ventilfeder |
| 106 | Ventilsitz |
| 108 | erster Raum |
| 110 | zweiter Raum |
| 112 | dritter Raum / Steuerraum |
| 114 | Steuerleitung |
| 116 | O-Ring |
| 118 | O-Ring |
| 120 | Symmetrieachse |
| 122 | Elastomerdichtung |
| 124 | Kragen |
| 126 | Kragen |

**Patentansprüche**

1. Luftaufbereitungsanlage (10) zum Versorgen einer Nutzkraftfahrzeugbremsanlage mit Druckluft, mit

  - einem ersten Druckluftausgang (21), an den ein erster Druckluftbehälter anschließbar ist,
  - einem weiteren Druckluftausgang (23) zur Versorgung einer Anhängerbremsanlage und
  - einem Drucklufteingang (1), der über ein erstes Überströmventil (12) mit dem ersten Druckluftausgang (21) und über ein weiteres Überströmventil (16, 74) mit dem weiteren Druckluftausgang (23) verbunden ist,

  **dadurch gekennzeichnet,**

  - **dass** parallel zu dem Überströmventil (12) ein Rückschlagventil (18) vorgesehen ist, das eine das Überströmventil (12) umgehende Luftströmung von dem ersten Druckluftausgang (21) weg über das Rückschlagventil (18) ermöglicht und eine das Überströmventil (12) umgehende Luftströmung zu dem ersten Druckluftausgang (21) hin unterbindet, und
  - **dass** das weitere Überströmventil (16) einen Steuerraum (112) aufweist, der über ein steuerbares Ventil (26) mit Druck beaufschlagt werden kann, wobei bei geöffnetem steuerbarem Ventil (26) eine Luftströmung von dem ersten Druckluftausgang (21) weg über das Rückschlagventil (18) und das steuerbare Ventil (26) zu dem Steuerraum (122) des weiteren Überströmventils (16) ermöglicht wird, um so ein Öffnen des weiteren Überströmventils (16) zu unterstützen.

2. Luftaufbereitungsanlage nach Anspruch 1, **dadurch gekennzeichnet,**

- **dass** zusätzlich zu dem ersten Druckluftausgang (21) ein zweiter Druckluftausgang (22) vorgesehen ist, an den ein zweiter Druckluftbehälter anschließbar ist,
- **dass** zusätzlich zu dem Überströmventil (12), welches ein erstes Überströmventil (12) ist, ein zweites Überströmventil (14) vorgesehen ist,
- **dass** der Drucklufteingang (1) über das zweite Überströmventil (14) mit dem zweiten Druckluftausgang (22) verbunden ist,
- **dass** parallel zu dem zweiten Überströmventil (14) ein Rückschlagventil (20) vorgesehen ist, das eine das zweite Überströmventil (14) umgehende Luftströmung von dem zweiten Druckluftausgang (22) weg über das zweite Rückschlagventil (20) ermöglicht und eine das zweite Überströmventil (14) umgehende Luftströmung zu dem zweiten Druckluftausgang (22) hin unterbindet, und
- **dass** bei geöffnetem steuerbarem Ventil (26) eine Luftströmung von dem zweiten Druckluftausgang (21) weg über das Rückschlagventil (20) und das steuerbare Ventil (26) zu dem Steuerraum (122) des weiteren Überströmventils (16) ermöglicht wird, um so ein Öffnen des weiteren Überströmventils (16) zu unterstützen.

3. Luftaufbereitungsanlage nach Anspruch 1 oder 2, **dadurch gekennzeichnet, dass** das steuerbare Ventil ein Magnetventil (26) ist, das direkt elektrisch betätigt werden kann.

4. Luftaufbereitungsanlage nach Anspruch 3, **dadurch gekennzeichnet, dass** das Magnetventil (26) im unbestromten Zustand geschlossen ist.

5. Luftaufbereitungsanlage nach Anspruch 3 oder 4, **dadurch gekennzeichnet, dass** das Magnetventil (26) von einer elektronischen Steuereinheit (76) der Luftaufbereitungsanlage (10) ansteuerbar ist.

6. Luftaufbereitungsanlage nach einem der vorangehenden Ansprüche, **dadurch gekennzeichnet, dass** der drucklufteingangsseitige Anschluss (32) des steuerbaren Ventils (26) zwischen dem Drucklufteingang (1) und einem Druckbegrenzer (36) liegt.

7. Luftaufbereitungsanlage nach einem der Ansprüche 1 bis 5, **dadurch gekennzeichnet, dass** der drucklufteingangsseitige Anschluss (34) des steuerbaren Ventils (26) zwischen einem Druckbegrenzer (36) und dem weiteren Überströmventil (16) liegt.

8. Luftaufbereitungsanlage nach einem der vorangehenden Anspruche, **dadurch gekennzeichnet,**

- **dass** das weitere Überströmventil (16) ein Ventilgehäuse (102), einen Ventilkolben (100) und eine Ventilfeder (104) aufweist,
- **dass** der Ventilkolben (100) durch eine von der Ventilfeder (104) aufgebrachte Kraft das weitere Überströmventil (16) über einen Ventilsitz (106) am Ventilgehäuse (102) schließen kann und
- **dass** der Ventilkolben (100) mit dem Ventilgehäuse (102) im geschlossenen Zustand des weiteren Überströmventils (16) mindestens drei voneinander getrennte Räume (110, 112, 114) innerhalb des Ventilgehäuses (102) definiert, wobei

- in einem ersten Raum (108) die Ventilfeder (104) angeordnet ist und der erste Raum (108) eine Öffnung zur Atmosphäre aufweist,
- ein zweiter Raum (110) an den Ventilsitz (106) angrenzt und
- ein dritter Raum der Steuerraum (112) ist, an den eine mit dem steuerbaren Ventil (26) verbundene Steuerleitung (114) angeschlossen ist.

9. Luftaufbereitungsanlage nach Anspruch 8, **dadurch gekennzeichnet,**

- **dass** die drei Räume (110, 112, 114) durch eine Außenkontur des Ventilkolbens (100) und Dichtmittel (116, 118) voneinander getrennt sind, wobei vom Ventilsitz (106) aus betrachtet ein vorderes Dichtmittel (118) den zweiten Raum (110) gegen den Steuerraum (112) abdichtet und ein hinteres Dichtmittel (118) den Steuerraum (112) gegen den ersten Raum (108) abdichtet, und
- **dass** die Außenkontur derart gestaltet ist, dass ein Druck im Steuerraum (112) den Ventilkolben (100) gegen die Kraft der Ventilfeder (104) mit Kraft beaufschlagt.

10. Verfahren zum Versorgen einer Nutzkraftfahrzeugbremsanlage mit Druckluft mittels einer Luftaufbereitungsanlage (10), wobei die Luftaufbereitungsanlage umfasst:

- einen ersten Druckluftausgang (21), an den ein erster Druckluftbehälter anschließbar ist,
- einen weiteren Druckluftausgang (23) zur Versorgung einer Anhängerbremsanlage und
- einen Drucklufteingang (1), der über ein erstes Überströmventil (12) mit dem ersten Druckluftausgang (21) und über ein weiteres Überströmventil (16) mit dem weiteren Druckluftausgang (23) verbunden ist,

**dadurch gekennzeichnet,**

- **dass** parallel zu dem Überströmventil (12) ein Rückschlagventil (18) vorgesehen ist, das eine das Überströmventil (12) umgehende Luftströmung von dem ersten Druckluftausgang (21) weg über das Rückschlagventil (18) ermöglicht und eine das Überströmventil (12) umgehende Luftströmung zu dem ersten Druckluftausgang (21) hin unterbindet,
- **dass** das weitere Überströmventil (16) einen Steuerraum (112) aufweist, der über ein steuerbares Ventil (26) mit Druck beaufschlagt werden kann, wobei bei geöffnetem steuerbarem Ventil (26) eine Luftströmung von dem ersten Druckluftausgang (21) weg über das Rückschlagventil (18) und das steuerbare Ventil (26) zu dem Steuerraum (112) des weiteren Überströmventils (16) ermöglicht wird, um so ein Öffnen des weiteren Überströmventils (16) zu unterstützen.

11. Verfahren nach Anspruch 10, **dadurch gekennzeichnet,**

- **dass** zusätzlich zu dem ersten Druckluftausgang (21) ein zweiter Druckluftausgang (22) vorgesehen ist, an den ein zweiter Druckluftbehälter anschließbar ist,
- **dass** zusätzlich zu dem Überströmventil (12), welches ein erstes Überströmventil (12) ist, ein zweites Überströmventil (14) vorgesehen ist,
- **dass** der Drucklufteingang (1) über das zweite Überströmventil (14) mit dem zweiten Druckluftausgang (22) verbunden ist,
- **dass** parallel zu dem zweiten Überströmventil (14) ein Rückschlagventil (20) vorgesehen ist, das eine das zweite Überströmventil (14) umgehende Luftströmung von dem zweiten Druckluftausgang (22) weg über das zweite Rückschlagventil (20) ermöglicht und eine das zweite Überströmventil (14) umgehende Luftströmung zu dem zweiten Druckluftausgang (22) hin unterbindet, und
- **dass** bei geöffnetem steuerbarem Ventil (26) eine Luftströmung von dem zweiten Druckluftausgang (21) weg über das Rückschlagventil (20) und das steuerbare Ventil (26) zu dem Steuerraum (112) des weiteren Überströmventils (16) ermöglicht wird, um so ein Öffnen des weiteren Überströmventils (16) zu unterstützen.

12. Verfahren nach Anspruch 10 oder 11, **dadurch gekennzeichnet, dass** das steuerbare Ventil (26) geöffnet wird, wenn bei intakten Betriebsbremskreisen ein Bremssignal vorliegt und der der Anhängerbremsanlage zur Verfügung stehende Druck in einem vorgegebenen Intervall liegt.

13. Verfahren nach Anspruch 12, **dadurch gekennzeichnet, dass** das Intervall zwischen ca. 3 und 6,5 bar liegt.

14. Verfahren nach Anspruch einem der Ansprüche 10 bis 13, **dadurch gekennzeichnet, dass** das steuerbare Ventil (26) geöffnet wird, wenn bei einem defekten Betriebsbremskreis ein Bremssignal vorliegt.

15. Nutzkraftfahrzeug mit einer Luftaufbereitungsanlage nach einem der Ansprüche 1 bis 9.

16. Überströmventil zur Verwendung in einer Luftaufbereitungsanlage nach einem der Ansprüche 1 bis 9.

**Claims**

1. Air regeneration system (10) for supplying a brake system in a commercial motor vehicle with compressed air, comprising

- a first compressed-air discharge port (21) to which a first compressed-air accumulator may be connected,
- a further compressed-air discharge port (23) for supplying a brake system in a trailer, and
- a compressed-air inlet port (1) that is connected via a first overflow valve (12) to said first compressed-air discharge port (21) and via a further overflow valve (16, 74) to said second compressed-air discharge port (23),

**characterised in**

- **that** a check valve (18) is provided in parallel with said overflow valve (12), which enables an air flow by-passing said overflow valve (12) from said first compressed-air discharge port (21) via said check valve (18) and prevents an air flow by-passing said overflow valve (12) to said first compressed-air discharge port (21), and
- **that** said further overflow valve (16) comprises a control volume (112) to which pressure may be applied via a controllable valve (26), with an air flow from said first compressed-air discharge port (21) via said check valve (18) and via said controllable valve (26) to said control volume (122) of said further overflow valve (16) being enabled when said controllable valve (26) is open, so as to assist the opening of said further overflow valve (16).

2. Air regeneration system according to Claim 1, **characterised in that**

- in addition to said first compressed-air discharge port (21) a second compressed-air discharge port (22) is provided to which a second compressed-air accumulator may be connected,

- that in addition to said overflow valve (12), which is a first overflow valve (12), a second overflow valve (14) is provided,

- that said compressed-air inlet port (1) is connected via said second overflow valve (14) to said second compressed-air discharge port (22),

- that in parallel with said second overflow valve (14), a check valve (20) is provided which enables an air flow by-passing said second overflow valve (14) from said second compressed-air discharge port (22) via said second check valve (20) and prevents an air flow by-passing said second overflow valve (14) to said second compressed-air discharge port (22), and

- that when said controllable valve (26) is opened, an air flow from said second compressed-air discharge port (21) via said check valve (20) and said controllable valve (26) to said control volume (122) of said further overflow valve (16) is enabled so as to assist the opening of said further overflow valve (16).

3. Air regeneration system according to Claim 1 or 2, **characterised in that** said controllable valve is a solenoid valve (26) which is adapted to be directly electrically operated.

4. Air regeneration system according to Claim 3, **characterised in that** said solenoid valve (26) is closed in the non-energised state.

5. Air regeneration system according to Claim 3 or 4, **characterised in that** said solenoid valve (26) is adapted to be controlled by an electronic controller (76) of the air regeneration system (10)

6. Air regeneration system according to any of the preceding Claims, **characterised in that** the connector (32) of said controllable valve (26) on the side of said compressed-air inlet port is placed between said compressed-air inlet port (1) and a pressure-limiting means (36).

7. Air regeneration system according to any of the Claims 1 to 5, **characterised in that** the connector (34) of said controllable valve (26) on the side of the compressed-air input port is placed between a pressure-limiting means (36) and said further overflow valve (16).

8. Air regeneration system according to any of the preceding Claims, **characterised in**

   - **that** said further overflow valve (16) comprises a valve housing (102), a valve piston (100) and a valve spring (104),

   - **that** said valve piston (100) is adapted to close said further overflow valve (16) via a valve seat (106) on said valve housing (102) under the influence of a force applied by said valve spring (104), and

   - **that** when said further overflow valve (16) is closed, said valve piston (100) cooperates with said valve housing (102) to define at least three volumes (110, 112, 114) separated from each other within said valve housing (102), with

      - said valve spring (104) being disposed in a first volume (108) and said first volume (108) presenting an opening towards the atmosphere,

      - with a second volume (110) being adjacent to said valve seat (106), and

      - with a third volume being said control volume (112) to which a control line (114) is connected which is connected to said controllable valve (26).

9. Air regeneration system according to Claim 8, **characterised in**

      - **that** said three volumes (110, 112, 114) are separated from each other by an outside contour of said valve piston (100) and by sealing means (116, 118), with a front sealing means (118) sealing said second volume (110) from said control volume (112) and with a rear sealing means (118) sealing said control volume (112) from said first volume (108), seen from said valve seat (106), and

      - **that** said outside contour is so designed that a pressure in said control volume (112) acts upon said valve piston (100) with a force in opposition to the force of said valve spring (104).

10. Method of supplying a brake system in a commercial motor vehicle with compressed air by means of an air regeneration system (10), wherein said air regeneration system comprises:

      - a first compressed-air discharge port (21) to which a first compressed-air accumulator may be connected,

      - a further compressed-air discharge port (23) for supplying a brake system in a trailer, and

      - a compressed-air inlet port (1) that is connected via a first overflow valve (12) to said first compressed-air discharge port (21) and via a further overflow valve (16, 74) to said second compressed-air discharge port (23),

   **characterised in**

      - **that** a check valve (18) is provided in parallel with said overflow valve (12), which enables an air flow by-passing said overflow valve (12) from said first compressed-air discharge port (21) via said check valve (18) and prevents an air flow by-passing said overflow valve (12) to said first compressed-air discharge port (21), and

- **that** said further overflow valve (16) comprises a control volume (112) to which pressure may be applied via a controllable valve (26), with an air flow from said first compressed-air discharge port (21) via said check valve (18) and via said controllable valve (26) to said control volume (122) of said further overflow valve (16) being enabled when said controllable valve (26) is open, so as to assist the opening of said further overflow valve (16).

11. Method according to Claim 10, **characterised in**

- in addition to said first compressed-air discharge port (21) a second compressed-air discharge port (22) is provided to which a second compressed-air accumulator may be connected,
- that in addition to said overflow valve (12), which is a first overflow valve (12), a second overflow valve (14) is provided,
- that said compressed-air inlet port (1) is connected via said second overflow valve (14) to said second compressed-air discharge port (22),
- that in parallel with said second overflow valve (14), a check valve (20) is provided which enables an air flow by-passing said second overflow valve (14) from said second compressed-air discharge port (22) via said second check valve (20) and prevents an air flow by-passing said second overflow valve (14) to said second compressed-air discharge port (22), and
- that when said controllable valve (26) is opened, an air flow from said second compressed-air discharge port (21) via said check valve (20) and said controllable valve (26) to said control volume (122) of said further overflow valve (16) is enabled so as to assist the opening of said further overflow valve (16).

12. Method according to Claim 10 or 11, **characterised in that** in the case of appropriately operating service brake circuits, that said controllable valve (26) is opened when a brake signal is present and that the pressure available in the brake system of the trailer ranges within a predetermined interval.

13. Method according to Claim 12, **characterised in that** said interval is within the range from 3 to 6.5 bar, approximately.

14. Method according to any of the Claims 10 to 13, **characterised in that** said controllable valve (26) is opened when a brake signal is present in the case of a failed service brake circuit.

15. Commercial vehicle equipped with an air regeneration system according to any of the Claims 1 to 9.

16. Overflow valve for application in an air regeneration system according to any of the Claims 1 to 9.

**Revendications**

1. Système de traitement d'air (10) à alimenter un système de freinage à bord d'un véhicule automoteur utilitaire en air comprimé, comprenant

- une première sortie de l'air comprimé (21) à raccorder un premier accumulateur de l'air comprimé,
- une sortie de l'air comprimé supplémentaire (23) à alimenter un système de freinage dans une remorque, et
- une entrée de l'air comprimé (1), qui est reliée, via une première soupape de décharge, (12) à ladite première sortie de l'air comprimé (21) et, via une soupape de décharge supplémentaire, (16, 74), vers ladite deuxième sortie de l'air comprimé (23),

**caractérisé en ce**

- **qu'**un clapet de retenue (18) est disposé en parallèle à ladite soupape de décharge (12), qui permet un courant d'air contournant ladite soupape de décharge (12) à partir de ladite première sortie de l'air comprimé (21) via ledit clapet de retenue (18), en empêchant un courant d'air contournant ladite soupape de décharge (12) vers ladite première sortie de l'air comprimé (21), et
- en ce que ladite soupape de décharge supplémentaire (16) comprend un espace de commande (112), auquel on peut appliquer une pression via une soupape commandable (26), à un courant d'air à partir de ladite première sortie de l'air comprimé (21) via ledit clapet de retenue (18) et via ladite soupape commandable (26) vers ledit espace de commande (122) de ladite soupape de décharge supplémentaire (16) étant permis, quand ladite soupape commandable (26) est ouverte, afin de supporter l'ouverture de ladite soupape de décharge supplémentaire (16).

2. Système de traitement d'air selon la revendication 1, **caractérisé en ce**

- **que**, de façon supplémentaire à ladite première sortie de l'air comprimé (21), une deuxième sortie de l'air comprimé (22) est formée, à laquelle on peut raccorder un deuxième accumulateur de l'air comprimé,

- **que**, de façon supplémentaire à ladite soupape de décharge (12), qui constitue une première soupape de décharge (12), une deuxième soupape de décharge (14) est disposée,

- **que** ladite entrée de l'air comprimé (1) est raccordée, via ladite deuxième soupape de décharge (14), à ladite deuxième sortie de l'air comprimé (22),

- **qu'**en parallèle à ladite deuxième soupape de décharge (14), un clapet de retenue (20) est disposé, qui permet un courant d'air contournant ladite deuxième soupape de décharge (14) à partir de ladite deuxième sortie de l'air comprimé (22) via ledit deuxième clapet de retenue (20), en bloquant un courant d'air contournant ladite deuxième soupape de décharge (14) vers ladite deuxième sortie de l'air comprimé (22), et

- en ce que, quand ladite soupape commandable (26) est ouverte, un courant d'air à partir de ladite deuxième sortie de l'air comprimé (21) via ledit clapet de retenue (20) et ladite soupape commandable (26) vers ledit espace de commande (122) de ladite soupape de décharge supplémentaire (16) est permis afin de supporter l'ouverture de ladite soupape de décharge supplémentaire (16).

3. Système de traitement d'air selon la revendication 1 or 2, **caractérisé en ce que** ladite soupape commandable est une électrovanne (26) apte à être commandé directement par courant électrique.

4. Système de traitement d'air selon la revendication 3, **caractérisé en ce que** ladite électrovanne (26) est fermé en état hors tension.

5. Système de traitement d'air selon la revendication 3 ou 4, **caractérisé en ce que** ladite électrovanne (26) est apte à être commandé par une unité de commande électronique (76) du système de traitement d'air (10)

6. Système de traitement d'air selon une quelconque des revendications précédentes, **caractérisé en ce que** le raccord (32) de ladite soupape commandable (26) du côté de ladite entrée de l'air comprimé est placé entre ladite entrée de l'air comprimé (1) et un moyen limiteur de pression (36).

7. Système de traitement d'air selon une quelconque des revendications 1 à 5, **caractérisé en ce que** le raccord (34) de ladite soupape commandable (26) du côté de l'entrée de l'air comprimé est placé entre un moyen limiteur de pression (36) et ladite soupape de décharge supplémentaire (16).

8. Système de traitement d'air selon une quelconque des revendications précédentes, **caractérisé en ce**

- **que** ladite soupape de décharge supplémentaire (16) comprend une cage de soupape (102), un piston de soupape (100) et un ressort de soupape (104),

- **que** ledit piston de soupape (100) est apte à fermer ladite soupape de décharge supplémentaire (16) via une siège de soupape (106) à ladite cage de soupape (102) sous l'influence d'un effort appliqué par ledit ressort de soupape (104), et

- en ce que, quand ladite soupape de décharge supplémentaire (16) est fermée, ledit piston de soupape (100) coopère avec ladite cage de soupape (102) afin de définir au moins trois espaces (110, 112, 114) séparé l'un de l'autre à l'intérieur de ladite cage de soupape (102),

- audit ressort de soupape (104) étant disposé dans un premier espace (108) et audit premier espace (108) ayant une ouverture vers l'atmosphère,

- à un deuxième espace (110) étant contigu à ladite siège de soupape (106), et

- à un troisième espace constituant ledit espace de commande (112), auquel se raccord une ligne de commande (114), qui est connectée à ladite soupape commandable (26).

9. Système de traitement d'air selon la revendication 8, **caractérisé en ce**

- **que** lesdits trois espaces (110, 112, 114) sont séparés l'un de l'autre par le contour extérieur dudit piston de soupape (100) et moyennant des moyens d'étanchéité (116, 118), à un moyen d'étanchéité avant (118) étanchant ledit deuxième espace (110) relativement audit espace de commande (112) et à un moyen d'étanchéité arrière (118) étanchant ledit espace de commande (112) relativement audit premier espace (108), vue à partir de ladite siège de soupape (106), et

- en ce que ledit contour extérieur est conçu d'une telle façon, qu'une pression régnant dans ledit espace de commande (112) agisse sur ledit piston de soupape (100) à un effort opposé à l'effort dudit ressort de soupape (104).

10. Procédé à alimenter un système de freinage à bord d'un véhicule automoteur utilitaire en air comprimé moyennant un système de traitement d'air (10), dans lequel ledit système de traitement d'air comprend :

- une première sortie de l'air comprimé (21) à raccorder un premier accumulateur de l'air comprimé,
- une sortie de l'air comprimé supplémentaire (23) à alimenter un système de freinage dans une remorque, et
- une entrée de l'air comprimé (1), qui est reliée, via une première soupape de décharge, (12) to ladite première sortie de l'air comprimé (21) et, via une soupape de décharge supplémentaire, (16, 74), vers ladite deuxième sortie de l'air comprimé (23),

**caractérisé en ce**

- **qu'**un clapet de retenue (18) est disposé en parallèle à ladite soupape de décharge (12), qui permet un courant d'air contournant ladite soupape de décharge (12) à partir de ladite première sortie de l'air comprimé (21) via ledit clapet de retenue (18), en empêchant un courant d'air contournant ladite soupape de décharge (12) vers ladite première sortie de l'air comprimé (21), et
- en ce que ladite soupape de décharge supplémentaire (16) comprend un espace de commande (112), auquel on peut appliquer une pression via une soupape commandable (26), à un courant d'air à partir de ladite première sortie de l'air comprimé (21) via ledit clapet de retenue (18) et via ladite soupape commandable (26) vers ledit espace de commande (122) de ladite soupape de décharge supplémentaire (16) étant permis, quand ladite soupape commandable (26) est ouverte, afin de supporter l'ouverture de ladite soupape de décharge supplémentaire (16).

11. Procédé selon la revendication 10, **caractérisé en ce**

- **que**, de façon supplémentaire à ladite première sortie de l'air comprimé (21), une deuxième sortie de l'air comprimé (22) est formée, à laquelle on peut raccorder un deuxième accumulateur de l'air comprimé,
- **que**, de façon supplémentaire à ladite soupape de décharge (12), qui constitue une première soupape de décharge (12), une deuxième soupape de décharge (14) est disposée,
- **que** ladite entrée de l'air comprimé (1) est raccordée, via ladite deuxième soupape de décharge (14), à ladite deuxième sortie de l'air comprimé (22),
- **qu'**en parallèle à ladite deuxième soupape de décharge (14), un clapet de retenue (20) est disposé, qui permet un courant d'air contournant ladite deuxième soupape de décharge (14) à partir de ladite deuxième sortie de l'air comprimé (22) via ledit deuxième clapet de retenue (20), en bloquant un courant d'air contournant ladite deuxième soupape de décharge (14) vers ladite deuxième sortie de l'air comprimé (22), et
- en ce que, quand ladite soupape commandable (26) est ouverte, un courant d'air à partir de ladite deuxième sortie de l'air comprimé (21) via ledit clapet de retenue (20) et ladite soupape commandable (26) vers ledit espace de commande (122) de ladite soupape de décharge supplémentaire (16) est permis afin de supporter l'ouverture de ladite soupape de décharge supplémentaire (16).

12. Procédé selon la revendication 10 ou 11, **caractérisé en ce qu'**au cas de fonctionnement sans défauts des circuits de frein de service, ladite soupape commandable (26) s'ouvre à la présence d'un signal de serrage du frein, et quand la pression disponible dans le système de freinage de la remorque se trouve au-dedans d'un intervalle prédéterminé.

13. Procédé selon la revendication 12, **caractérisé en ce que** ledit intervalle se trouve dans la gamme entre 3 et 6.5 bar environ.

14. Procédé selon une quelconque des revendications 10 à 13, **caractérisé en ce que** ladite soupape commandable (26) s'ouvre à la présence d'un signal de serrage du frein au cas d'un défaut d'un circuit de freinage de service.

15. Véhicule utilitaire, muni d'un système de traitement d'air selon une quelconque des revendications 1 à 9.

16. Soupape de décharge pour l'emploi dans un système de traitement d'air selon une quelconque des revendications 1 à 9.

Fig. 1

Fig. 2

Fig. 3

Fig. 4

Normale Fahrzeugbetriebssequenz

*501*

Defekt Betriebsbremsanlage ?

NEIN        JA

*505*

*502*

Bremssignal?        Bremssignal?

NEIN                                    NEIN

JA        JA

*503*

3 bar < $p_{23}$ ≤ 6,5 bar

NEIN

JA

*504*        *506*

Magnetventil
bestromen        Magnetventil
bestromen

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19913726 A1

- DE 10029900 A1